**Europäisches Patentamt**

**European Patent Office**

**Office européen des brevets**

(19)

(11) Numéro de publication : **0 452 395 B1**

(12)

# FASCICULE DE BREVET EUROPEEN

(45) Date de publication du fascicule du brevet :
**09.12.92 Bulletin 92/50**

(51) Int. Cl.$^5$ : **G01T 1/16, G01T 1/17**

(21) Numéro de dépôt : **90901833.5**

(22) Date de dépôt : **09.01.90**

(86) Numéro de dépôt international :
**PCT/FR90/00017**

(87) Numéro de publication internationale :
**WO 90/08331 26.07.90 Gazette 90/17**

(54) **SYSTEME POUR DETECTER LA PRESENCE D'UN SIGNAL PUR DANS UN SIGNAL BRUITE DISCRET MESURE A TAUX MOYEN DE BRUIT CONSTANT.**

(30) Priorité : **10.01.89 FR 8900204**

(43) Date de publication de la demande :
**23.10.91 Bulletin 91/43**

(45) Mention de la délivrance du brevet :
**09.12.92 Bulletin 92/50**

(84) Etats contractants désignés :
**BE DE GB IT**

(56) Documents cités :
**EP-A- 0 200 596**
**EP-A- 0 202 980**

(56) Documents cités :
**Nuclear Instruments and Methods in Physics Research, Séction A, volume A248, nos. 2,3, 1er août 1986, Elsevier SciencePublishers B.V. (North-Holland Publishing Division), (Amsterdam, NL), M.L. Rambaut: "Detection d'un rayonnement corpusculaire etinformation", pages 471-482**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **RAMBAUT, Michel 57H, rue de la Hacquinière F-91440 Bures-sur-Yvette (FR)**

(74) Mandataire : **Mongrédien, André et al c/o BREVATOME 25, rue de Ponthieu F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un système pour détecter la présence d'un signal pur dans un signal bruité discret mesuré, cette détection étant réalisée avec une probabilité de fausse détection inférieure à un taux de fausse détection prédéterminé.

L'invention concerne la détection des signaux discrets, c'est-à-dire les signaux produits par des événements discontinus. L'invention s'applique notamment à la détection des rayonnements corpusculaires tels que les rayons neutroniques ou les rayons gamma.

La détection d'un signal pur dans un signal bruité mesuré suppose que l'on peut s'affranchir de la présence du bruit dans ledit signal mesuré. L'invention concerne un procédé de détection lorsque le taux moyen de bruit varie dans un intervalle ayant une borne supérieure MB. Cette condition est pratiquement toujours réalisée pour les rayonnements de neutrons car il y a très peu de neutrons libres dans l'environnement. Elle est également souvent réalisée en un lieu donné pendant une certaine durée de temps pour les rayonnements gamma.

La détection d'un rayonnement corpusculaire particulier, par exemple nucléaire, se fait en présence d'un bruit corpusculaire ayant plusieurs causes. Dans le cas d'un rayonnement nucléaire, une partie du bruit est due au rayonnement cosmique et l'autre partie est due à la radioactivité naturelle des terrains et des roches.

Il existe aussi un bruit dû au détecteur utilisé. Le rayonnement cosmique peut varier au cours du temps et le bruit corpusculaire dû aux roches et au terrain est essentiellement variable, selon le lieu où se fait la mesure. Un rayonnememt particulier ne peut donc être détecté que si l'on connaît le bruit ou bien si l'on en a une estimation suffisante.

Le stockage des informations est effectué pendant une durée de temps limitée $\Delta t$. Ce stockage des informations se fait de façon discrète : lorsqu'une particule est détectée, le contenu d'une mémoire est augmenté d'une unité. En général, un ou plusieurs paramètres définissent l'événement nucléaire détecté. Dans le cas où cet événement ne dépend que d'un paramètre unique, celui-ci peut être par exemple l'énergie : c'est le cas typique de la détection d'un rayonnement gamma à l'aide d'un germanium intrinsèque ou d'un scintillateur NaI associé à un photomultiplicateur. Ce paramètre unique peut aussi être le temps, par exemple lorsque l'on mesure le temps de vol d'une particule.

Usuellement, pour savoir si un signal a été détecté à l'aide d'un stockage effectué durant un intervalle de temps $\Delta t$, la pratique courante consiste à apprécier de quelle valeur le comptage obtenu dépasse l'estimation du bruit dont on dispose.

Ce bruit peut être estimé de différentes manières. Il peut être connu à l'avance par une mesure faite au préalable dans des circonstances où l'on est sûr qu'il n'y a pas de signal particulier. Il peut être également apprécié en cours d'expérience en l'absence de toute source de signal en extrapolant ou en interpolant les niveaux du signal détecté dans différents intervalles, par exemple énergétiques.

Pour cela, il faut que le taux de comptage dans les intervalles où l'on est sûr qu'il n'y a pas de bruit soit suffisant, pour pouvoir faire une estimation de la densité de probabilité du bruit dans les intervalles où l'on cherche à détecter un rayonnement particulier.

De manière classique, on estime qu'il y a effectivement un signal lorsque le taux de comptage N est tel que $N > B + K \cdot \sqrt{M}$, où M est le taux moyen de bruit estimé et K une constante égale à quelques unités.

Ce critère connu de détection n'est pas satisfaisant car il est empirique, la valeur de K étant choisie de façon non rationnelle en se fondant sur des expériences antérieures.

Un but de l'invention est de fournir un système de détection fondé sur un critère rationnel, déduit des lois de probabilité d'apparition du bruit et du rayonnement attendu. La détection selon l'invention présente ainsi l'avantage de ne dépendre que d'un critère objectif.

Dans l'art antérieur, un taux de comptage n'est pris en compte que s'il est supérieur au taux moyen de bruit augmenté d'un certain nombre de fois l'écart type $\sqrt{M}$.

On connait par ailleurs une méthode décrite dans la demande de brevet faite par le déposant et publiée sous le numéro 2 580 819 qui repose sur un principe différent. En effet, dans cette demande, on considère, au contraire, que tout dépassement du taux moyen de bruit constitue une information sur la présence ou l'absence d'un signal pur. Cette information est faible lorsque la différence entre le taux de comptage et le taux moyen de bruit est faible.

Plus la différence entre le taux de comptage et le taux moyen de bruit est importante, plus l'information apportée par la mesure est importante et plus la probabilité de fausse détection est faible. Le critère pratique de détection d'un signal pur est donc l'obtention d'une information suffisante, c'est-à-dire supérieure à un seuil Im, c'est-à-dire une probabilité de fausse détection inférieure à un taux de fausse détection prédéterminé.

La détection selon cette méthode consiste donc à comparer la probabilité de fausse détection PF, définie par le taux de comptage N mesuré et une estimation du taux moyen de bruit constant M, à un taux de fausse détection prédéterminé TF. Un signal pur est détecté si ladite probabilité est inférieure audit taux.

Dans la mesure où l'on connait la probabilité d'occurrence du nombre d'événements détectés pendant chaque intervalle de temps, la probabilité de fausse détection est exprimée en fonction du taux de comptage N et du taux moyen de bruit estimé M. Cette densité de probabilité est par exemple celle de le loi de Poisson pour les rayonnements corpusculaires.

L'utilisation directe de la relation entre la probabilité de fausse détection PF, le taux de comptage N et le taux moyen de bruit M pour décider si un rayonnement particulier est détecté, conduit à des calculs longs, car la probabilité de fausse détection PF est sous forme d'une série dépendant du taux de comptage N et du taux moyen de bruit M. La durée du calcul dépend de la valeur du taux de comptage N et est usuellement incompatible avec une détection en temps réel, si la durée de chaque comptage est de l'ordre de la seconde par exemple.

Pour remédier à cet inconvénient, et permettre une détection en temps réel, il a d'abord été proposé d'utiliser une table contenant pour une pluralité de valeurs de taux de comptage la valeur du taux moyen de bruit associée, telle que la probabilité de fausse détection PF pour ce taux moyen de bruit et ce taux de comptage soit comparé au taux de fausse détection prédéterminée TF.

Cette méthode a été appliquée à la conception d'appareillages portatifs et a consisté à faire une estimation de l'information à partir d'une valeur de seuil correspondant un taux de fausse alarme de $10^{-3}$.

Il s'est avéré que, même pour des vitesses de déplacement de l'ordre de 1 m/s, le taux des alarmes était excessif, par suite des variations importantes du bruit de fond naturel ; il a alors été décidé d'utiliser un algorithme plus adapté qui a été mis en oeuvre dans un appareillage embarquable. Cet algorithme est basé sur le principe d'une "Référence Fluctuante" et on peut en trouver une description dans la demande de brevet effectuée par le déposant et publiée sous le n° 2 579 767.

Cet algorithme implique le découpage du spectre en énergie, en quelques fenêtres (en pratique quatre fenêtres ont été choisies) ; dans chacune de ces fenêtres, la probabilité de faux signal, selon l'algorithme dit de la "Référence Fluctuante", est évaluée en ligne.

Or, avec cet algorithme il existe une limite quant à la possibilité de couvrir tout le spectre, par suite de la résolution limitée du détecteur, en particulier si ce détecteur est du type NaI.

Outre l'ensemble de tous ces inconvénients auxquels la demanderesse s'est heurté, la demanderesse a cherché à faciliter la réalisation des détecteurs portatifs. Pour cela, la demanderesse a cherché à simplifier l'électronique utilisée dans le détecteur portatif connu, par exemple celle qui est décrite dans la demande de brevet déjà évoquée et publiée sous le n° 2 580 819 en supprimant l'utilisation de la table de valeurs, ce qui l'a conduite à supprimer la mémoire dans laquelle cette table a été enregistrée. La suppression de cette table n'a pu avoir lieu que parce que la demanderesse s'est pesé le problème de la détection de façon différente.

En effet, cette simplification est le résultat d'une mise en forme semi-phénoménologique de la quantité d'informations I obtenues en fonction du comptage. La quantité d'informations I est exprimée selon l'invention par une fonction F liée à la borne supérieure du bruit MB et au taux moyen de signal observé pendant une mesure de durée déterminée.

Comme cela apparaît dans la fonction F, au lieu de choisir dans l'évaluation de l'information le taux moyen de bruit estimé M, le demanderesse a choisi la borne supérieure MB du bruit M.

Cette conception nouvelle obtenue par une approche différente de celles déjà connues conduit à la réalisation d'un détecteur plus petit, moins cher et donc à un emploi banalisé.

La présente invention a plus précisément pour objet un système pour détecter la présence d'un signal pur dans un signal bruité discret mesuré à taux moyen de bruit constant, avec une probabilité de fausse détection PF inférieure à un taux de fausse détection TF prédéterminé, comprenant en série un détecteur pour convertir le rayonnement reçu en impulsions électriques, un moyen de mise en forme, une échelle de comptage binaire, un moyen de traitement et un moyen de signalisation, le moyen de traitement comprenant un processeur permettant de mesurer un comptage $N_0$ pendant n périodes de temps $\Delta t_i$, successives égales et d'estimer une valeur du taux moyen de bruit M à partir de ce comptage $N_0$ et un circuit d'entrée-sortie, ledit système étant caractérisé en ce qu'il permet de :

A) - au préalable, effectuer une phase d'initialisation consistant à :
- déterminer une borne supérieure MB du bruit telle que MB= $\beta$M, $\beta$ étant un nombre entier supérieur à 1,

B) - effectuer une phase de détection de signal consistant à :
- mesurer un comptage $N_I$ durant au moins une période de temps $\Delta t_i$,
- estimer un comptage M1 attribué audit signal tel que M1=$N_I$-MB,
- calculer la quantité d'informations telle que :

$$I = F\left(\frac{M1}{MB^{1/2}}\right) \qquad (1)$$

avec MB égal à la valeur estimée,
- émettre un signal S lorsque le taux de signal M1 est positif, la fréquence de ce signal étant une fonction croissante de la quantité d'informations I.

Conformément à l'invention, la fonction F permettant de calculer la quantité d'informations dépend de deux fonctions $\alpha$ et K de la borne supérieure MB du bruit estimé de sorte que :

$$I = K(MB)\frac{M1^{\alpha(MB)}}{MB^{1/2}} \qquad (2)$$

Dans une variante de réalisation, la phase de détection consiste à :
- mesurer un comptage pendant plusieurs périodes $\Delta t_i$ successives en effectuant une division de chaque période $\Delta t_i$ en k périodes successives $Dt_i i=1,k$, et en mesurant un comptage $n_i$ durant chaque période $Dt_i$, la mesure du comptage N se faisant de sorte que :

$$N_i = N_{i-1} + n_i - n_{i-k}$$

dans lequel $N_{i-1}$ est le comptage mesuré durant la période précédente $\Delta t_{i-1}$, $n_i$ étant le comptage effectué durant la période $Dt_i$ et $n_{i-k}$ étant le comptage effectué durant la période $Dt_{i-k}$.

Avantageusement, le signal S émis à la fin de chaque comptage obtenu à la fin de chaque durée $\Delta t_i$ est un signal sonore de la forme S=H(I).fo, fo étant la fréquence du signal sonore émis dès que le taux de signal M1 est positif et H(I) une fonction croissante de la quantité d'information I.

Avantageusement, dans le cas où l'on procède à un échantillonnage de la durée de comptage, le signal S émis est un signal sonore dont la fréquence varie à l'issue de chaque comptage $Dt_i$, ce signal étant de la forme S=H(I).fo, fo étant la fréquence du signal émis dès que le taux de signal M1 est positif et H(I) une fonction croissante de la quantité d'information I.

D'autres caractéristiques et avantages ressortiront mieux de la description gui suit et qui est donnée à titre illustratif et nom limitatif en référence aux figures annexées, dans lesquelles :
- la figure 1 représente le schéma de réalisation d'un système selon l'invention,
- la figure 2 représente les différentes étapes de la détection opérée par le système selon l'invention,
- la figure 3 représente une variante de réalisation des étapes de détection dans le cas d'un échantillonnage de la durée de comptage $\Delta t$,
- la figure 4 représente les variations des fonctions $\alpha$ et K qui sont des fonctions de la borne supérieure du bruit MB,
- la figure 5 représente la quantité d'informations I en fonction du taux moyen de signal M1, à taux moyen de bruit MB constant.

L'invention s'applique à tous les rayonnements discrets, tels que les rayonnements corpusculaires, et concerne plus précisément l'analyse du signal délivré par un détecteur pour décider, avec une probabilité de fausse détection inférieure à un taux de fausse détection prédéterminé, si le signal analysé contient un signal pur dû à la présence d'une source particulière ou si ce signal se compose uniquement de bruit. A titre d'exemple, le procédé de l'invention s'applique notamment à la détection des rayons gamma et des rayons neutroniques.

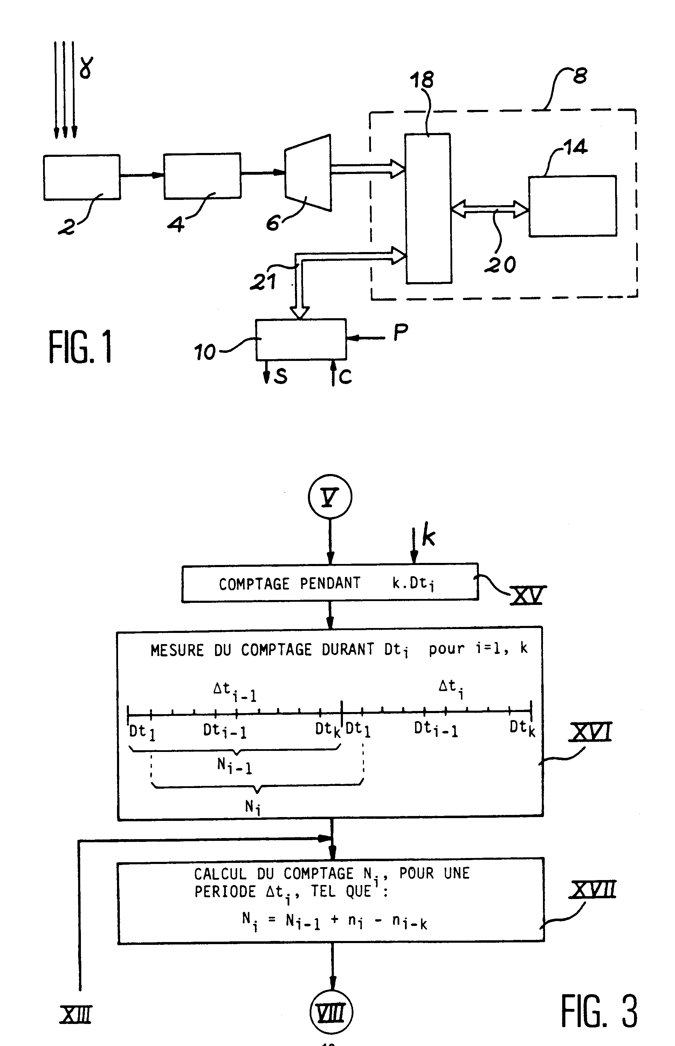

L'appareil représenté sur la figure 1 comprend un détecteur 2, un moyen de mise en forme 4, une échelle de comptage binaire 6 pouvant comprendre notamment un convertisseur analogique-numérique, un moyen de traitement 8 et une interface de dialogue homme-machine 10 classique en soi constituée par des boutons de commande (par exemple des interrupteurs), un convertisseur tension-fréquence et un moyen de signalisation (une alarme par exemple).

Le détecteur 2 dépend du rayonnement à détecter. Pour la détection de rayons gamma, ce détecteur peut être un germanium intrinsèque ou un scintillateur NaI associé à un photomultiplicateur ; pour la détection de neutrons, le détecteur est par exemple un compteur à He3.

Le détecteur 2 délivre une impulsion de tension pour chaque événement détecté. Cette impulsion est reçue par le moyen de mise en forme 4. Ce dernier peut comprendre notamment en série un amplificateur, un circuit de mise en forme et un discriminateur.

L'échelle de comptage binaire 6 est disposée en aval du moyen de mise en forme 4. Elle compte le nombre d'impulsions délivrées par le moyen 4 pendant des durées de comptage $\Delta t_i$.

Le moyen de traitement 8 comprend un processeur 14 et un circuit d'entrée-sortie 18. Ces éléments sont reliés par une voie 20 comprenant des lignes d'adresses, des lignes de données et des lignes de commande.

Le moyen de signalisation et de commande 10 est en liaison avec le processeur 14 à travers le circuit d'entrée-sortie 18 et une voie 21. Il comprend notamment des moyens d'alerte visuels et sonores qui sont déclenchés lorsqu'un signal pur est détecté et des moyens d'alimentation et des interrupteurs (non représentés) pour envoyer des signaux de commande correspondant à des commandes extérieures C et P.

On va maintenant décrire le fonctionnement du système de détection de l'invention en considérant, à titre d'exemple, le cas de la détection d'un rayonnement corpusculaire, tel qu'un rayonnement gamma ou un rayonnement neutronique. Le nombre de particules détectées pendant une durée de mesure $\Delta t_i$ est une variable aléatoire dont la densité de probabilité est celle de la loi de Poisson. La probabilité P de détecter durant le temps $\Delta t_i$, I événements dus aux rayonnements particuliers et J événements dus aux bruits est de :

$$P = e^{-(M1 + M)} . \frac{M1^I}{I!} . \frac{M^J}{J!}$$

où M1 et M sont les taux moyens associés aux variables aléatoires représentant le nombre de particules détectées dues au rayonnement particulier et le nombre de particules détectées dues au bruit.

La probabilité pour qu'il existe un rayonnement particulier, que le stockage N contienne ou non un événement qui lui soit dû, est alors égale à :

$$e^{-M} . \sum_{I=1}^{I=N} \frac{M^{N-I}}{(N-I)!} \int_0^\infty \frac{M1^I}{I!} e^{-M1} dM1$$

la probabilité complémentaire est la probabilité de fausse détection PF qui définit le probabilité pour qu'un rayonnement particulier soit détecté alors qu'aucun rayonnement particulier n'existe.

Le système de détection de l'invention permet de traduire cette probabilité sous forme d'une information I qui est fonction du taux moyen de signal M1 et de la borne supérieure du bruit estimé MB.

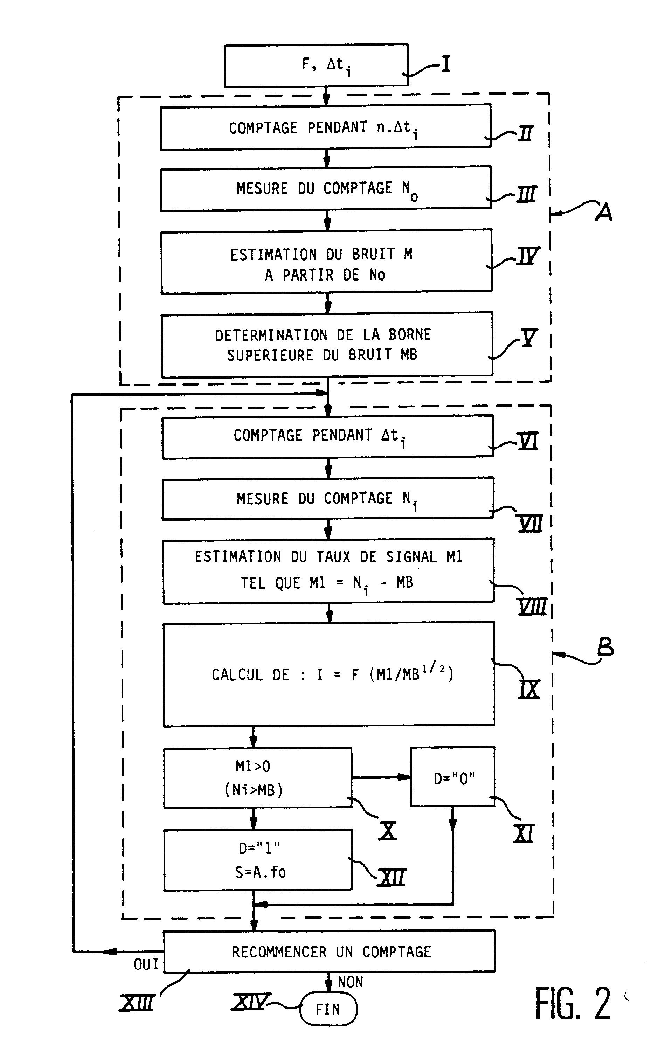

Les différentes opérations sont décrites en référence à la figure 2 qui représente les différentes opérations dans la détection effectuée par le système.

A) - Au préalable, l'on effectue une phase d'initialisation consistant à :
- mesurer un comptage $N_0$ durant n périodes de temps $\Delta t_i$ successives de durée égale,
- puis estimer une valeur du taux moyen de bruit M, à partir de ce comptage $N_0$,
- puis déterminer une borne supérieure MB du bruit M telle que MB= $\beta$M, $\beta$ étant un nombre entier supérieur à 1 que l'on se fixe en fonction de la sensibilité désirée,
et ensuite,
B) - effectuer une phase de détection du signal consistant à :
- mesurer un comptage $N_i$ durant une ou plusieurs périodes de temps $\Delta t_i$,
- puis estimer un comptage M1 attribué audit signal tel que : $M1 = N_i - MB$,
- puis calculer la quantité d'information I telle que :

$$I = F(\frac{M1}{MB^{1/2}}) \quad (1)$$

avec MB égal à la valeur estimée,
et enfin,
- émettre un signal S lorsque le taux de signal M1 est positif, la fréquence de ce signal étant une fonction croissante de la quantité d'information.

L'estimation du taux moyen M du bruit sur tout le spectre du signal reçu se fait de façon classique tel que décrit par exemple dans la demande de brevet français publiée sous le n° 2 580 819.

La fonction F est préalablement enregistrée en mémoire du processeur, qui exécute le calcul avec les données M1 et MB qui lui sont entrées préalablement.

Le bloc I de la figure 2 représente une étape consistant à rentrer en mémoire une fois pour toutes la fonction F, la durée des périodes $\Delta t_i$. Le bloc A représente la phase d'initialisation qui a lieu avant toute détection et qui consiste à effectuer une estimation du taux moyen de bruit M et de retenir sa borne supérieure.

Ce bloc A comporte les blocs II à V correspondant à chacune des étapes de la phase d'initialisation A.

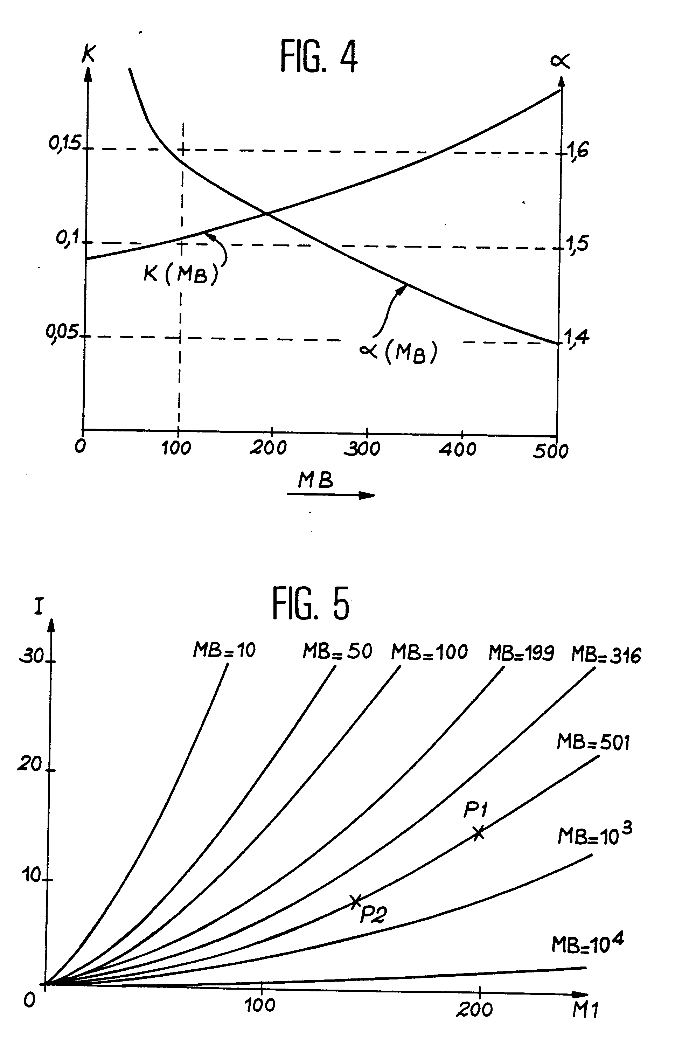

Ce bloc B représente la phase de détection du signal consistant à déclarer qu'il y a du signal dès que le taux M1 est positif et à émettre un signal S dont la fréquence est une fonction croissante de la quantité d'information, cette quantité I ayant une expression semi-phénoménologique donnée sur la figure 4.

Le bloc B comporte les blocs VI à XII correspondant aux différentes étapes ayant lieu lors de la phase B.

A la suite de cette phase B, l'utilisateur du détecteur peut recommencer autant de fois qu'il le désire les comptages durant des durées $\Delta t_i$.

Selon une variante de réalisation et afin d'augmenter la portée du détecteur, la phase B comporte quelques modifications dues au fait que chaque période de temps $\Delta t_i$ est divisée en k périodes de temps $Dt_i$ de comptage, i=1 à k. Cette variante correspond aux déroulements des étapes représentées sur la figure 3.

Le nombre k est donc préalablement stocké en mémoire du processeur.

D'une façon générale, l'on procède à plusieurs comptages successifs :

$N_{i-1}$, $N_i$, $N_{i+1}$, $N_{i+2}$,

jusqu'à ce que l'utilisateur décide d'arrêter.

L'on effectue à l'intérieur de chaque période de temps de durée $Dt_i$ un comptage $n_i$ et au bout d'une durée $\Delta t_i$, la mesure du comptage $N_i$ est obtenue en procédant au calcul suivant :

$$N_i = N_{i-1} + n_i - n_{i-k}.$$

Le comptage $N_{i-1}$ correspond au comptage obtenu à la période précédente, $n_i$ correspond au comptage durant la période $Dt_i$ de la période $\Delta t_{i+1}$ et, $n_{i-k}$ correspond au comptage durant la période $Dt_{i-k}$.

Les étapes correspondant à cette variante sont représentées sur la figure 3.

Selon cette réalisation, les blocs représentés sur cette figure s'insèrent entre les blocs V et VIII de la figure 2 à la place des blocs VI-VII. Le bloc XV représente une étape de comptages successifs pendant une durée $k.Dt_i$. En effet, selon cette variante, l'on effectue un premier comptage pendant une durée $k.Dt_i$.

Le paramètre k correspondant au nombre de sous-périodes $Dt_i$ est entré en mémoire.

Le bloc XVI représente l'étape de mesure de comptage pendant chaque intervalle de temps $Dt_i$.

Les comptages $N_{i-1}$, $n_i$, $n_{i+k}$, i=1, k sont enregistrés en mémoire afin de calculer pour chaque période de durée $\Delta t_i$, le comptage $N_i$ tel que :

$$N_i = N_{i-1} + n_i - n_{i-k}.$$

Pour les deux variantes de réalisation un signal S pouvant être un signal sonore est émis. Ce signal est une fonction croissante H de la quantité d'information I.

Pour cela, tant que le taux de signal M1 est inférieur à zéro (bloc X, fig. 2), un signal numérique de commande D correspondant par exemple à un niveau bas (état 0) est envoyé par le processeur aux moyens de signalisation (bloc XI, fig. 2) qui ne vont alors émettre aucun signal.

Un nouveau comptage ou une nouvelle série de comptages peut être recommencée.

Dans le cas contraire, dès que le taux de signal M1 est positif, le signal numérique de commande D a alors un niveau haut (état 1) et est envoyé par le processeur aux moyens de signalisation (bloc XII, fig. 2).

Le signal S est par exemple un signal sonore dont la fréquence est une fonction croissante de la quantité I. Le signal S est par exemple obtenu au moyen d'un convertisseur tension-fréquence qui reçoit la quantité d'information I : S = fo.H(I). Lorsque la quantité obtenue dépasse le seuil zéro, le signal émis S a une fréquence fonction de la fréquence fo du signal émise pour le seuil.

Sur la figure 4, on a représenté les variations des fonctions $\alpha$ et K en fonction de la borne supérieure du bruit MB.

Ces variations permettent pour une borne MB donnée de connaître directement par simple lecture sur ces courbes la valeur de la fonction $\alpha$ et de la fonction K à utiliser pour le calcul de la quantité I qui est mis sous la forme :

$$I = K \frac{M1^\alpha}{MB^{1/2}} \quad (2)$$

M1 est connu, MB est connu, $\alpha$ et K sont obtenus par ces courbes ou bien calculés & partir de la courbe de variation de I en fonction de M1 pour la borne MB désirée.

En effet, on peut également, au lieu de lire directement les valeurs de $\alpha$ et de K sur les courbes de la figure 4, calculer ces valeurs à partir de la courbe I que l'on a alors enregistrée en fonction du taux de signal M1 pour la borne MB désirée.

Les coordonnées de deux points quelconques P1 et P2 pris sur la courbe enregistrée sont utilisées pour établir un système de deux équations à deux inconnues à résoudre.

En effet, les coordonnées [M1(P1), I(P1)] , [M1(P2), I(P2)] de ces points sont reportées dans l'expression I donnée par la relation (2). Les relations ainsi obtenues pour chaque point P1, P2 forment un système d'équation à deux inconnues $\alpha$ et K que l'on résout classiquement pour obtenir $\alpha$ et K.

Par ailleurs, on prévoit dans le dispositif un bouton de commande C placé sur l'interface de dialogue homme-machine 10 pour que ces derniers envoient un signal (un niveau de tension donné par exemple) vers une entrée de commande du microprocesseur 14 afin de déclencher la phase B de détection.

Un autre bouton de commande P est prévu sur l'interface de dialogue homme-machine 10 pour que ces derniers envoient un signal (un niveau de tension donne par exemple) vers une entrée de commande du microprocesseur afin de sélectionner le mode de fonctionnement correspondant à l'une ou à l'autre des variantes décrites.

**Revendications**

1. Système pour détecter la présence d'un signal pur dans un signal bruité discret mesuré à taux moyen de bruit constant, avec une probabilité de fausse détection PF inférieure à un taux de fausse détection TF prédéterminé, comprenant en série un détecteur (2) pour convertir le rayonnement reçu en impulsions électriques, un moyen de mise en forme (4), une échelle de comptage binaire (6), un moyen de traitement (8) et un moyen de signalisation (10), le moyen de traitement comprenant un processeur (14) permettant de mesurer un comptage $N_0$ pendant n périodes de temps $\Delta t_i$, successives égales et d'estimer une valeur du taux moyen de bruit M à partir de ce comptage $N_0$ et un circuit d'entrée-sortie (18), ledit système étant caractérisé en ce qu'il permet de :

    A) - au préalable, effectuer une phase d'initialisation consistant à :
        - déterminer une borne supérieure MB du bruit telle que MB= $\beta$M, $\beta$ étant un nombre entier supérieur à 1,
    B) - pour détecter un signal :
        - mesurer un comptage $N_i$ durant au moins une période de temps $\Delta t_i$,
        - estimer un comptage M1 attribué audit signal tel que M1=$N_i$-NM,
        - calculer la quantité d'informations I telle que :

$$I = F\left(\frac{M1}{MB^{1/2}}\right) \quad (1)$$

    avec MB égal à la valeur estimée,
    - émettre un signal S lorsque le taux de signal M1 est positif, la fréquence de ce signal étant une fonction croissante de la quantité d'informations I.

2. Système pour détecter la présence d'un signal pur dans un signal bruité selon la revendication 1, caractérisé en ce que la fonction F dépend de deux fonctions $\alpha$ et K de la borne supérieure MB du bruit estimé de sorte que :

$$I = K(MB)\frac{M1^{\alpha(MB)}}{MB^{1/2}} \quad (2)$$

3. Système pour détecter la présence d'un signal pur dans un signal bruité selon la revendication 1 ou 2, caractérisé en ce que la phase de détection B consiste à :
    - mesurer un comptage pendant plusieurs périodes $\Delta t_i$ successives en effectuant une division de chaque période $\Delta t_i$ en k périodes successives $Dt_i$,i=1,k, et en mesurant un comptage $n_i$ durant chaque période $Dt_i$, la mesure du comptage $N_i$ se faisant de sorte que :

$$N_i = N_{i-1} + n_i - n_{i-k}$$

    dans lequel $N_{i-1}$ est le comptage mesuré durant la période précédente $\Delta t_{i-1}$, $n_i$ étant le comptage effectué durant la période $Dt_i$ et $n_{i-k}$ étant le comptage effectué durant la période $Dt_{i-k}$.

4. Système pour détecter la présence d'un signal pur dans un signal bruité selon l'une quelconque des revendications 1 à 3, caractérisé en ce que le signal S émis à la fin de chaque comptage obtenu à la fin de chaque durée $\Delta t_i$ est un signal sonore de la forme S=H(1).fo, fo étant la fréquence du signal sonore émis dès que le taux de signal M1 est positif, H(I) étant une fonction croissante de la quantité I.

5. Système selon la revendication 3, caractérisé en ce que le signal S émis est un signal sonore dont la fréquence varie à l'issue de chaque comptage de durée $Dt_i$, ce signal étant de la forme S=H(I).fo, fo étant la fréquence du signal émis dès que le taux de signal M1 est positif et H(I) une fonction croissante de la quantité d'information I.

**Patentansprüche**

1. Vorrichtung zum Detektieren eines rauschfreien Signals, das in einem verrauschten, diskreten Signal vorhanden ist und bei einem konstanten mittleren Rauschniveau mit einer Fehldetektionswahrscheinlichkeit PF, die unterhalb einer vorherbestimmten Fehldetektionsrate TF liegt, gemessen wird, wobei die Vorrichtung seriell aus einem Detektor (2) zur Umwandlung der empfangenen Strahlung in elektrische Impulse, einem Formgeber (4), einem Binärzähler (6), einer Verarbeitungseinrichtung (8) und einer Signalisierungseinrichtung (10) besteht, wobei die Verarbeitungseinrichtung aus einem Prozessor (14), der während n aufeinanderfolgender gleicher Zeitintervalle $\Delta t_i$ eine Zählmessung mit der Zählung $N_0$ und aus dieser Zählung $N_0$ die Abschätzung eines mittleren Rauschniveauwerts M erlaubt, und einem Eingangs-/Ausgangsschaltkreis (18) besteht, wobei die genannte Vorrichtung dadurch gekennzeichnet ist, daß sie erlaubt:

A) im voraus eine Initialisierungsphase durchzuführen, die darin besteht,
   - eine obere Grenze MB für das Rauschen derart zu bestimmen, daß
      MB = βM, wobei β eine ganze Zahl größer als 1 ist,
B) um ein Signal zu messen:
   - während mindestens eines Zeitintervalls $\Delta t_i$ eine Zählmessung mit der Zählung $N_i$ durchzuführen,
   - eine dem genannten Signal zugeordnete Zählung M1 abzuschätzen,
      so daß M1 = $N_i$ - NM,
   - die Informationsmenge I derart zu berechnen, daß:

$$I = F\left(\frac{M1}{MB^{1/2}}\right) \quad (1)$$

wobei MB gleich dem abgeschätzten Wert ist,
   - ein Signal S auszusenden, wenn das Signalniveau M1 positiv ist,
      wobei die Frequenz dieses Signals eine steigende Funktion der Informationsmenge I ist.

2. Vorrichtung zum Detektieren eines rauschfreien Signals, das in einem verrauschten Signal vorhanden ist, gemäß Anspruch 1, dadurch gekennzeichnet, daß die Funktion F von zwei Funktionen α und K der oberen Grenze MB für das Rauschen abhängt, gemäß folgender Schätzung:

$$(2) \quad I = K(MB)\frac{M1^{\alpha(MB)}}{MB^{1/2}}$$

3. Vorrichtung zum Detektieren eines rauschfreien Signals, das in einem verrauschten Signal vorhanden ist, gemäß Anspruch 1 oder 2, dadurch gekennzeichnet, daß die Detektion B umfaßt:
   - eine Zählmessung während mehrerer aufeinanderfolgender Intervalle $\Delta t_i$, indem eine Division jedes Intervalls $\Delta t_i$ in k aufeinanderfolgende Intervalle $Dt_i$, i = 1,k, durchgeführt und die Zählung $n_i$ während der Dauer jedes Intervalls $Dt_i$ durchgeführt wird, wobei jede Zählmessung $N_i$ so durchgeführt wird, daß:

$$N_i = N_{i-1} + n_i - n_{i-k}$$

wobei $N_{i-1}$ die während des vorangegangenen Intervalls $\Delta t_{i-1}$ durchgeführte Zählmessung, $n_i$ die während des Intervalls $Dt_i$ durchgeführte Zählung und $n_{i-k}$ die während des Intervalls $Dt_{i-k}$ durchgeführte Zählung ist.

4. Vorrichtung zum Detektieren eines rauschfreien Signals, das in einem verrauschten Signal vorhanden ist, gemäß eines der Ansprüche 1 bis 3, dadurch gekennzeichnet, daß das am Ende jeder Zählung, die am Ende jeder Zeitdauer $\Delta t_i$ erhalten wird, ausgesandte Signal S ein akustisches Signal der Form S = H(I).$f_0$ ist, wobei $f_0$ die Frequenz des akustischen Signals ist, das sobald das Signalniveau M1 positiv ist, ausgesandt wird, und H(I) eine steigende Funktion der Größe I ist.

5. Vorrichtung gemäß Anspruch 3, dadurch gekennzeichnet, daß das ausgesandte Signal S ein akustisches Signal ist, dessen Frequenz unmittelbar nach jeder Zählung der Dauer $Dt_i$ variiert, wobei dieses Signal von der Form S = H(I).$f_0$ ist, wobei $f_0$ die Frequenz des akustischen Signals ist, das sobald das Signalniveau M1 positiv ist, ausgesandt wird, und H(I) eine steigende Funktion der Informationsmenge I ist.

**Claims**

1. System for detecting the presence of a pure signal in a discreet noise-containing signal measured at a constant mean noise level with a false detection probability PF below a predetermined false detection rate TF, comprising in series a detector (2) converting the radiation received into electrical pulses, a shaping means (4), a binary counting scale (6), a processing means (8) and an indicating means (10), the processing means comprising a processor (14) measuring a count $N_0$ during n time periods $\Delta t_i$, which are successive and equal, estimating a value of the mean noise level M on the basis of said count $N_0$, and an

input-output circuit (18), said system being characterized in that it makes it possible:

A) beforehand to carry out an initialization phase consisting of:

determining an upper noise limit MB such that MB= $\beta$M, $\beta$ being an integer higher than 1,

B) carrying out a signal detection phase consisting of:

measuring a count $N_i$ during at least one time period $\Delta t_i$,

estimating a count M1 attributed to the said signal such that M1=$N_i$-MB, calculating the information quantity such that:

$$I = F\left(\frac{M1}{MB^{\frac{1}{2}}}\right) \qquad (1)$$

with MB equal to the estimated value and

emitting a signal S when the signal level M1 is positive, the frequency of said signal being a rising function of the information quantity I.

2. System for detecting the presence of a pure signal in a noise-containing signal according to claim 1, characterized in that the function F is dependent on two functions $\alpha$ and K of the upper terminal MB of the estimated noise, so that:

$$I = K(MB)\frac{M1^{\alpha(MB)}}{MB^{\frac{1}{2}}} \qquad (2)$$

3. System for detecting the presence of a pure signal in a noise-containing signal according to claims 1 or 2, characterized in that the detection phase B consists of measuring a count during several successive periods $\Delta t_i$ by carrying out a division of each period $\Delta t_i$ in to k successive periods $Dt_i$, i= 1, k, and measuring a count $n_i$ during each period $Dt_i$, the measurement of the count $N_i$ taking place in such a way that:

$$N_i = N_{i-1} + n_i - n_{i-k}$$

in which $N_{i-1}$ is the count measured during the preceding period $\Delta t_{i-1}$ $n_i$ being the count performed during the period $Dt_i$ and $n_{i-k}$ being the count performed during the period $Dt_{i-k}$.

4. System for detecting the presence of a pure signal in a noise-containing signal according to any one of the claims 1 to 3, characterized in that the signal S emitted at the end of each count obtained at the end of each period $\Delta t_i$ is a sound signal of form S=H(I).fo, fo being the frequency of the sound signal emitted as soon as the signal level M1 is positive, H(I) being a rising function of the quantity I.

5. System according to claim 3, characterized in that the emitted signal S is a sound signal, whose frequency varies at the end to each count of duration $Dt_i$, said signal being of form S=H(I).fo, fo being the frequency of the emitted signal as soon as the signal level M1 is positive and H(I) is a rising function of the information quantity I.

FIG.1

COMPTAGE PENDANT   k.Dt$_i$   XV

MESURE DU COMPTAGE DURANT Dt$_i$   pour i=1, k

$\Delta t_{i-1}$      $\Delta t_i$

Dt$_1$   Dt$_{i-1}$   Dt$_k$ Dt$_1$   Dt$_{i-1}$   Dt$_k$   XVI

N$_{i-1}$

N$_i$

CALCUL DU COMPTAGE N$_i$, POUR UNE
PERIODE $\Delta t_i$, TEL QUE :   XVII

$$N_i = N_{i-1} + n_i - n_{i-k}$$

XIII

VIII

FIG. 3

10

EP 0 452 395 B1

F, Δt$_i$ — I

COMPTAGE PENDANT n.Δt$_i$ — II

MESURE DU COMPTAGE N$_o$ — III

ESTIMATION DU BRUIT M A PARTIR DE No — IV

DETERMINATION DE LA BORNE SUPERIEURE DU BRUIT MB — V

A

COMPTAGE PENDANT Δt$_i$ — VI

MESURE DU COMPTAGE N$_i$ — VII

ESTIMATION DU TAUX DE SIGNAL M1 TEL QUE M1 = N$_i$ - MB — VIII

CALCUL DE : I = F (M1/MB$^{1/2}$) — IX

B

M1>0 (Ni>MB) — X

D="0" — XI

D="1" S=A.fo — XII

RECOMMENCER UN COMPTAGE

OUI

XIII

NON

XIV — FIN

FIG. 2

11

# FIG. 4

# FIG. 5